# FASCICULE DE BREVET EUROPEEN

(11) **EP 1 204 849 B1**
(45) Date de publication et mention de la délivrance du brevet: **06.10.2004**
(21) Numéro de dépôt: 00958576.1
(22) Date de dépôt: 21.07.2000
(51) Int. Cl.: G01G 3/14, G01G 19/18

(54) **MACHINE DE REMPLISSAGE PONDERALE COMPORTANT UN POSTE DE PESAGE**
VORRICHTUNG ZUR ABFÜLLGEWICHTSERFASSUNG MIT EINER WAAGE
WEIGHT-FILLING MACHINE COMPRISING A WEIGHING STATION

(30) Priorité: 23.07.1999 FR 9909694
(43) Date de publication de la demande: 15.05.2002
(73) Titulaire: SIDEL, 76053 Le Havre Cedex (FR)
(72) Inventeur: MEUNIER, Eric, F-76053 Le Havre Cedex (FR); SABIRON, Gérard, F-76053 Le Havre Cedex (FR)
(74) Mandataire: Siloret, Patrick
(86) Numéro de dépôt international: PCT/FR2000/002096
(87) Numéro de publication internationale: WO 2001/007876

(56) Documents cités:
- EP-A- 0 595 238
- FR-A- 2 770 292

## Description

L'invention concerne une machine de remplissage pondérale de récipients, c'est-à-dire une machine dans laquelle la fin du remplissage du récipient est déterminée en fonction de l'évolution du poids du récipient pour obtenir une quantité prédéterminée de produit à l'intérieur de celui-ci.

L'invention concerne plus particulièrement une machine de remplissage pondérale, du type dans lequel un récipient à remplir est porté par un dispositif de préhension qui est supporté par un capteur d'effort, et du type dans lequel le capteur d'effort est constitué d'une pièce déformable possédant une extrémité de base reliée à un bâti et une extrémité d'interface sur laquelle est fixé le dispositif de préhension.

Une telle machine est décrite par exemple dans le document de brevet FR-A-2.770.292.

Dans ce type de machine, le récipient est porté par un dispositif de préhension qui peut être une pince apte à saisir le récipient par le col, comme dans le document cité ci-dessus, ou qui peut être une sellette sur laquelle le récipient est posé. Dans les deux cas, le dispositif de préhension comporte généralement des moyens complémentaires de guidage du corps du récipient pour en assurer un positionnement précis.

Bien entendu, le dispositif de préhension du récipient est obligatoirement supporté par le capteur d'effort pour que ce dernier soit soumis entièrement au poids du récipient sans qu'il ne puisse y avoir d'interférence avec d'autres parties de la machine.

Aussi, tous les efforts subis par le dispositif de préhension sont intégralement retransmis au capteur.

Or, il peut se produire des disfonctionnements des moyens de transfert de récipients qui permettent d'amener le récipient vide sur le dispositif de préhension et qui l'en retirent une fois le remplissage terminé. De tels disfonctionnements peuvent alors se traduirent par le fait que des efforts importants sont exercés sur le dispositif de préhension et donc sur le capteur. Or, un capteur d'effort est prévu pour pouvoir supporter des efforts en rapport avec le poids des récipients qu'il sert à mesurer. Au-delà, il peut subir des déformations irrémédiables qui le rendent inutilisable et qui peuvent même conduire à sa rupture.

L'invention a donc pour objet de proposer une nouvelle conception d'une machine de remplissage pondérale qui permette de protéger le capteur efficacement sans altérer en aucune façon sa précision de mesure.

Dans ce but. l'invention propose une machine du type décrit précédemment, caractérisée en ce que le dispositif de préhension est relié à l'extrémité d'interface par des moyens élastiques qui sollicitent le dispositif de préhension vers une position normale dans laquelle il est en appui sur une surface d'appui liée à l'extrémité d'interface, et en ce que le dispositif de préhension peut se déplacer par rapport à l'extrémité d'interface selon une direction de protection, à l'encontre des moyens élastiques, jusqu'à une position de butée dans laquelle il arrive au contact d'une surface de butée liée au bâti.

Selon d'autres caractéristiques de l'invention :
- le dispositif de préhension est monté sur l'extrémité d'interface de manière à pouvoir coulisser par rapport à l'extrémité d'interface selon une direction de protection entre sa position normale et sa position de butée ;
- la direction de protection est sensiblement horizontale ;
- le dispositif de préhension s'étend depuis l'extrémité d'interface selon la direction de protection de telle sorte que le récipient est en porte-à-faux par rapport au capteur ;
- le dispositif de préhension est monté à coulissement sur une tige de guidage cylindrique qui est solidaire de l'extrémité d'interface du capteur ;
- il est prévu des moyens de blocage en rotation du dispositif de préhension par rapport au capteur autour de l'axe de la tige de guidage ;
- le capteur de poids est un capteur à moment constant réalisé sous la forme d'un corps qui est muni d'au moins un évidemment central de telle sorte que les deux extrémités sont liées l'une à l'autre par des traverses sensiblement parallèles dont les jonctions aux extrémités sont déformables pour former des points d'articulation, et les traverses sont sensiblement parallèles à la direction de protection ;
- le dispositif de préhension et le bâti délimitent entre eux un compartiment étanche à l'intérieur duquel est agencé le capteur d'effort ;
- l'étanchéité du compartiment est assurée par un soufflet souple qui relie le dispositif de préhension au bâti.

D'autres caractéristiques et avantages de l'invention apparaîtront à la lecture de la description détaillée qui suit ainsi que dans les dessins annexés dans lesquels :
- la figure 1 est une vue en perspective éclatée des principaux éléments d'un poste de pesage pour une machine de remplissage conforme aux enseignements de l'invention ;
- les figures 2 et 3 sont des vues en coupe du poste de pesage de la figure 1, celui-ci étant respectivement en position normale d'utilisation et en position de protection.

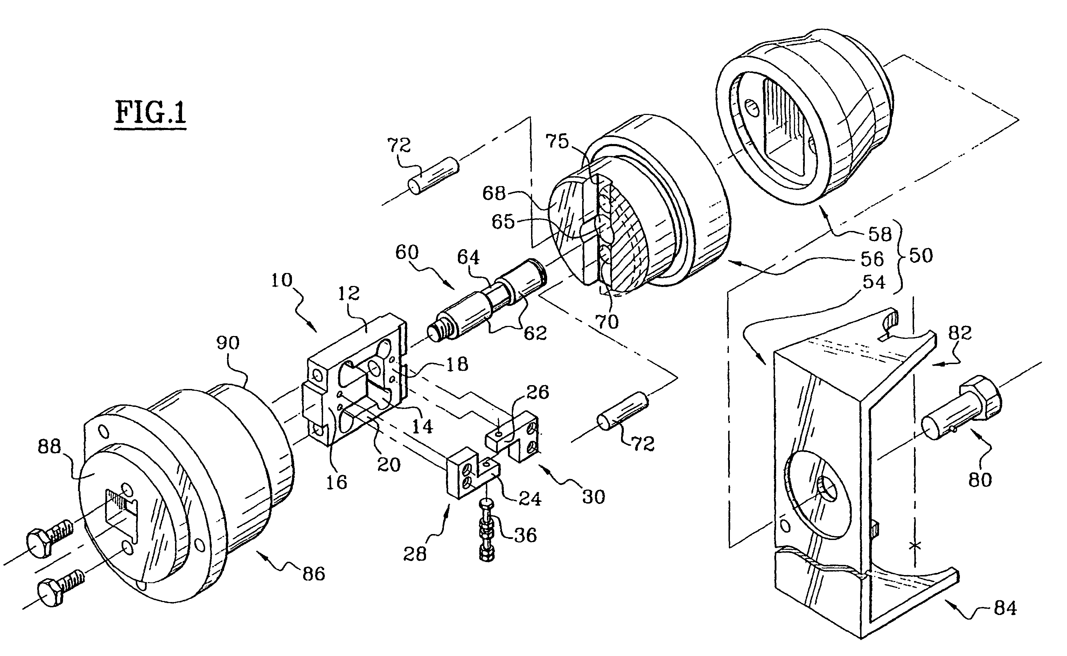

On a illustré sur les figures 1 à 3 les principaux éléments d'un poste de pesage pour une machine de remplissage pondérale de récipients. La machine peut par exemple être une machine à carrousel rotatif dans laquelle le carrousel est équipé de plusieurs postes de remplissage de récipients, chaque poste de remplissage comportant notamment un poste de pesage, un bec de remplissage et un circuit de distribution muni d'une vanne qui est commandée en fonction du poids du récipient.

Le poste de pesage comporte pour l'essentiel un dispositif de préhension 50 du récipient 52 qui est fixé à un élément de bâti du carrousel par l'intermédiaire d'un capteur d'effort 10.

Le capteur d'effort 10 est un capteur à corps déformable du type appelé « à moment constant ».

Ce capteur présente un corps métallique 12 sensiblement en forme de plaque et pourvu d'un évidement central 14. Cet évidement 14 délimite, dans le corps 12, quatre côtés parmi lesquels on distinguera un montant de base 16, destiné à assurer la fixation du capteur sur un élément de bâti du carrousel, et un montant d'interface 18 destiné à être relié au dispositif de préhension 50 du récipient 52 à peser.

Les deux montants 16, 18 sont de préférence orientés sensiblement verticalement. Les deux autres côtés délimités par l'évidement 14 forment des traverses 20 sensiblement horizontales qui relient les deux montants. La forme de l'évidement 14 est telle que les zones de jonction 22 entre les traverses 20 et les montants 16, 18 sont amincies et sont donc particulièrement déformables par rapport aux autres côtés dont on peut considérer, par comparaison, qu'ils sont indéformables.

Le corps 12 du capteur forme ainsi un quadrilatère susceptible de se déformer à la manière d'un parallélogramme lorsqu'une charge est appliquée sur le montant d'interface 18.

Le corps 12 du capteur est agencé dans un plan vertical, et, sous l'effet du poids du récipient, le capteur ne se déforme que dans son plan. Dans un tel capteur, on peut placer des jauges de déformation sur les zones amincies 22 formant articulation de manière à pouvoir déduire, en fonction de leur déformation, l'intensité de l'effort appliqué sur le capteur, en l'occurrence le poids du récipient.

Le dispositif de préhension 50 comporte entre autres un porte-récipent 54, adapté à la forme du récipient 52 à remplir, un palier de liaison 56 qui permet de relier le dispositif de préhension au capteur, et une tête intermédiaire 58 interposée entre le porte-récipient 54 et le palier de liaison 56.

Une tige centrale 60 est vissée dans le montant d'interface 18 du capteur pour s'étendre horizontalement selon son axe A1, dans le plan du capteur et vers l'avant de celui-ci, c'est-à-dire dans la direction opposée au bâti. Cette tige 60 comporte, en porte-à-faux par rapport au capteur, deux portées cylindriques de révolution 62 qui sont séparées horizontalement par un tronçon de moindre diamètre 64.

Le palier de liaison 56 est sensiblement cylindrique de révolution et il est muni d'un alésage central 65 qui permet son montage sur la tige 60. De préférence, ce montage est effectué avec interposition d'une bague 66 à faible coefficient de frottement ce qui, combiné avec la présence des deux portées 62 de longueur réduite, permet d'assurer une grande liberté de mouvement du palier de liaison 56 sur la tige 60. Le palier 56 peut donc coulisser axialement sur la tige 60. La face arrière 68 du palier 56 présente deux logements 70 qui sont agencés de part et d'autre de l'axe A1 dans un plan vertical et qui sont destinés à recevoir des tampons élastiques ou des ressorts de compression 72. Les tampons élastiques sont de dimension supérieure aux logements 70 de sorte qu'ils dépassent axialement vers l'arrière au-delà de la face arrière 68 du palier afin de venir en appui contre le bord avant 74 du montant d'interface 18 du capteur 10.

Ainsi, les tampons élastiques tendent à solliciter le palier axialement vers l'avant. Sous l'action des tampons 72, le palier 56 est donc en appui axialement par sa face avant 76 contre un anneau élastique fendu 78 qui est monté dans une gorge à l'extrémité avant de la tige 60 et qui forme une surface d'appui liée à la tige 60, donc liée au montant d'interface 18 du capteur 10.

Pour éviter toute rotation du palier 56 autour de l'axe A1 de la tige 60, on peut voir que le bord avant 74 du capteur présente la forme d'un parallélépipède allongé verticalement de manière à former une sorte de tenon 73 qui est destiné à être reçu dans une gorge verticale complémentaire 75 formée dans la face arrière 68 du palier 56. Le tenon 73 se présente comme une extrémité avant d'épaisseur réduite du corps 12 du capteur. Le tenon 73 et la gorge 75 empêchent toute rotation du palier par rapport au capteur 10 autour de l'axe A1 sans pour autant empêcher le coulissement axial relatif des deux pièces.

Tant au niveau de la liaison entre le palier 56 et la tige 60 qu'au niveau de la liaison anti-rotation du tenon 73 avec la gorge 75, on cherchera à limiter les jeux de fonctionnement sans pour autant introduire d'effort de serrage notable.

La tête intermédiaire 58 du dispositif de préhension 50 est fixée par tout moyen approprié sur la face avant 76 du palier 56, par exemple à l'aide de simples vis. A son tour, le porte-récipient 54 est fixé sur la face avant de la tête intermédiaire 58, de préférence à l'aide de moyens de fixation rapide tels qu'une vis "quart de tour" 80. Ce type de fixation permettra de procéder à un changement rapide du porte-récipient 54 lorsqu'on voudra changer la forme des récipients à remplir.

Dans l'exemple illustré, les récipients à remplir sont des bouteilles en PET (polyéthylène téréphtalate) dont le col est pourvu d'une collerette, et, au-dessus de la collerette, d'une gorge de préhension. Le porte-récipient 54 comporte alors une pince supérieure 82 qui saisit le col de la bouteille en s'engageant dans la collerette de préhension, de façon que la bouteille soit suspendue. Le porte-récipient comporte aussi un étrier de guidage 84 qui coopère avec le corps de la bouteille pour la maintenir bien à l'aplomb de la pince supérieure 82.

Toutefois, l'invention pourrait aussi être mise en oeuvre avec un porte-récipient en forme de sellette sur lequel le récipient à remplir serait simplement posé. La sellette pourrait bien entendu elle aussi comporter un étrier de guidage du corps et elle serait avantageusement pourvue d'un centreur agissant au niveau du col.

Du fait de l'assemblage qui vient d'être décrit, on comprend que l'ensemble du dispositif de préhension 50 des récipients se comporte comme une pièce unique qui peut se déplacer axialement par rapport au capteur 10, à l'encontre toutefois de l'action des tampons élastiques 72.

On choisit de préférence des tampons 72 dont la raideur est suffisante pour maintenir en permanence le palier 56 en appui contre l'anneau élastique 78 tout au long du fonctionnement normal de la machine, y compris au moment de l'engagement et du dégagement du récipient sur le dispositif de préhension.

Cependant l'intégralité des efforts imposés au dispositif de préhension est reportée sur le capteur, soit par le biais des tampons élastiques 72, soit par le biais de la tige 60. De la sorte, le capteur peut mesurer le poids du récipient qui est porté par le dispositif de préhension, et il permet donc de déterminer la quantité de produit qui est déversée dans le récipient par le bec de remplissage.

Au contraire, si on applique sur le dispositif de préhension un effort trop important et que cet effort comporte une composante importante selon une direction tendant à faire reculer le dispositif de préhension, ce dernier peut se déplacer axialement vers l'arrière sur la tige 60. Ce faisant, il comprime les tampons 72.

Selon l'invention, le dispositif de préhension peut ainsi reculer jusqu'à venir en butée contre une surface de butée qui est liée au bâti du carrousel.

En l'occurrence, on peut voir que le poste de pesage comporte un carter 86 qui est tubulaire de révolution d'axe A1 et qui est ouvert à son extrémité avant. Le carter 86 est fixe sur le bâti 85 de sorte qu'il constitue un élément de ce bâti.

Le capteur 10 est reçu à l'intérieur du compartiment 94 cylindrique qui est ainsi délimité à l'intérieur du carter 86 et son montant de base 16 est fixé sur une paroi arrière 88 du carter 86. Pour un bon positionnement du capteur 10 par rapport au carter 86 et au bâti 85, on peut voir que le montant de base 16 du capteur comporte un talon de positionnement 89 qui est reçu avec serrage dans un logement complémentaire 91 de la paroi arrière 91 du carter 86.

On peut voir que seule la partie avant en forme de tenon 73 du capteur 10 dépasse à l'extérieur du carter 86, en avant d'un bord circulaire avant 90 de celui-ci.

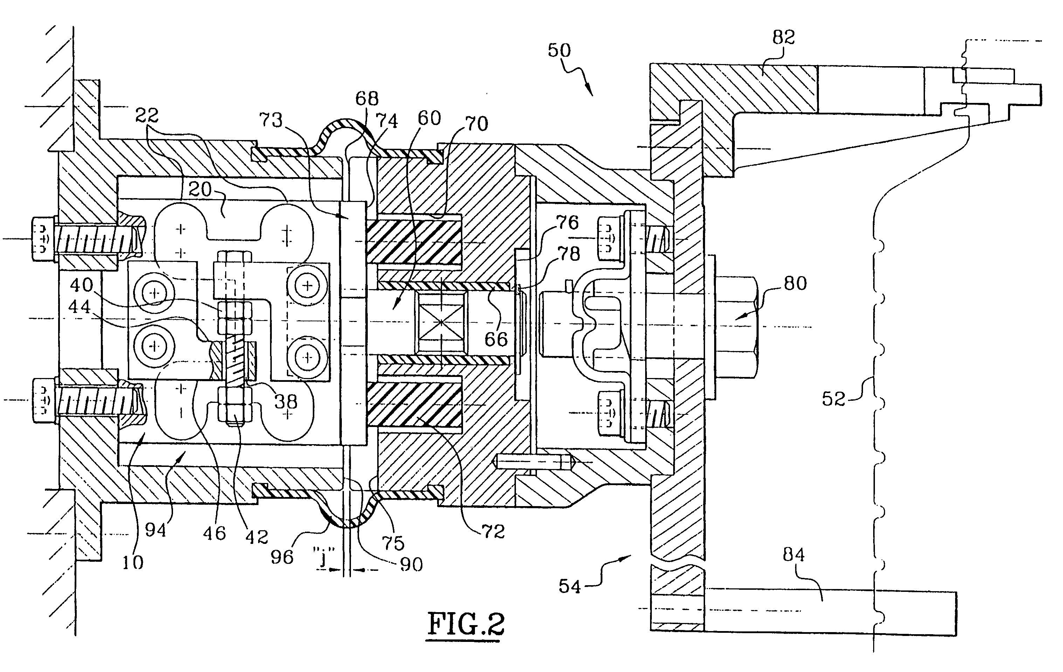

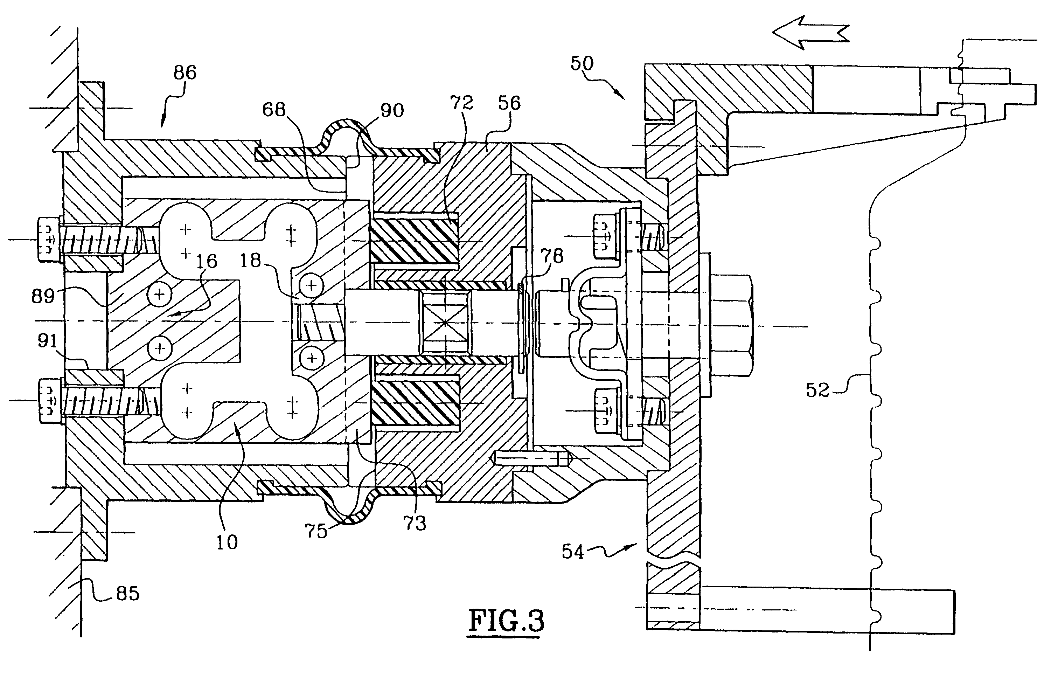

Comme on peut le voir sur la figure 2, en position avancée du dispositif de préhension, il existe un jeu axial "j" entre la face arrière 68 du palier 86 et le bord avant 90 du carter 86. Au contraire, lorsque le dispositif de préhension a reculé d'une distance "j", le palier vient en appui contre le carter, donc contre le bâti ainsi que cela est représenté à la figure 3. Une fois dans cette position le palier ne peut plus reculer mais, surtout, la quasi-totalité de l'effort excédentaire selon la composante horizontale se trouve reportée sur le carter et non pas sur le capteur. Selon la direction horizontale, le capteur n'est soumis alors qu'à l'effort des tampons élastiques 72.

Ainsi, grâce à l'invention, le capteur se trouve protégé contre des efforts anormaux dirigés dans une direction telle que les traverses du capteur seraient sollicitées en compression. Or, c'est justement selon cette orientation que les zones de jonction 22 du capteur se montrent les plus fragiles. En effet, elles sont alors susceptibles de se déformer de manière irrémédiable par flambement.

Avantageusement, on prévoit de relier le carter 86 au palier 56 par une membrane cylindrique souple 96 faisant fonction de soufflet pour fermer de manière étanche le compartiment 94 dans lequel est contenu le capteur, ce qui le met à l'abri de toute projection, tant lors des phases de remplissage que lors des phases de nettoyage de la machine.

Par ailleurs, il est prévu des moyens qui permettent de protéger le capteur 10 contre des efforts excessifs dirigés selon la direction verticale. A cet effet, le capteur est pourvu de deux doigts de butée 24, 26, qui s'étendent horizontalement chacun depuis un des montants 16, 18. Les doigts 24, 26 sont de section rectangulaire et chacun d'eux forme une branche d'une équerre 28, 30 qui est fixée sur une face latérale du montant 16, 18 correspondant. Bien entendu, les équerres sont fixées sur un même côté du capteur 10. On peut voir que chaque équerre est destinée à être fixée de manière simple par deux vis perpendiculaires au plan du capteur, ce qui est un gage d'accessibilité et de facilité de montage.

Les deux doigts 24, 26 s'étendent donc dans un même plan vertical qui est décalé transversalement par rapport au plan vertical du capteur. Ils sont décalés entre eux selon la direction verticale et leurs longueurs sont telles que, selon la direction horizontale, les doigts se recouvrent au moins partiellement pour que leurs extrémités se trouvent en vis-à-vis l'une de l'autre selon la direction verticale. Ainsi, lorsque le capteur se déforme selon la direction verticale, le doigt 26 se déplace avec le montant d'interface 18, ce déplacement étant essentiellement vertical par rapport au doigt 24 qui est fixe puisque porté par le montant de base 16.

Dans l'exemple illustré, le doigt mobile 26 lié à au montant d'interface 18 est agencé au-dessus du doigt fixe 24 lié au montant de base 16.

A l'extrémité de l'un des doigts, en l'occurrence le doigt 26 lié au montant d'interface 18, on a fixé une tige filetée qui s'étend verticalement. Cette tige filetée est ici réalisée sous la forme d'une vis 36 qui est vissée au travers de l'extrémité du doigt 26 et qui est donc fixe par rapport à celui-ci. La tête de la vis 36 est en appui contre une face supérieure du doigt mobile 26 tandis que sa partie filetée s'étend en dessous du doigt 26 et au travers d'un alésage lisse 38 formé dans l'extrémité du doigt fixe 24. Lorsque le capteur se déforme, la partie filetée de la vis peut coulisser librement dans l'alésage 38 selon une direction sensiblement verticale si on néglige le mouvement horizontal induit par la cinématique du parallélogramme.

Sur la vis 36, on a monté deux séries 40, 42 de deux écrous dont l'une 40 se trouve au-dessus du doigt fixe 24 et l'autre 42 au-dessous. Dans chaque série, les deux écrous sont serrés l'un contre l'autre pour former un ensemble écrou/contre-écrou dont la position le long de la vis est figée. Chacune des deux séries 40, 42 d'écrous est donc susceptible de venir en appui contre le doigt fixe 24, respectivement contre les faces supérieure 44 et inférieure 46 de celui-ci qui forment ainsi des faces de butée. Bien entendu, le diamètre de l'alésage 38 est inférieur à celui des écrous 40, 42 pour que ceux-ci puissent faire fonction de faces de butée liées au doigt mobile 26.

Comme on peut le voir sur la figure 2, les deux séries 40, 42 d'écrous sont positionnées sur la vis 36 de manière à ce que, en l'absence de toute charge sur le capteur, elles soient chacune écartée verticalement de leur face de butée 44, 46 correspondante. De la sorte, à partir de cette position, le capteur peut se déformer librement sous l'effet d'une charge appliquée vers le bas ou vers le haut. Les écartements des deux séries d'écrous avec leur face de butée correspondante peuvent être différents.

Sous l'effet d'une charge excessive vers le haut ou vers le bas, l'une des séries d'écrous vient en appui contre la face de butée correspondante du doigt 24. Une fois ainsi en appui, le doigt 26 empêche le montant d'interface 18 de se déplacer plus loin selon la direction de l'application de l'effort, fixant la limite de la déformation du capteur.

Bien entendu cette limite est ajustable par une simple modification de la position axiale d'une des série d'écrous sur la vis 36.

Comme on peut le constater, la machine selon l'invention est munie d'un poste de pesage dans lequel le capteur 10 est particulièrement bien protégé contre des efforts anormalement élevés et contre les projections de produits divers.

## Revendications

1. Machine de remplissage pondérale, du type dans lequel un récipient à remplir (52) est porté par un dispositif de préhension (50) qui est supporté par un capteur d'effort (10), et du type dans lequel le capteur d'effort est constitué d'une pièce déformable possédant une extrémité de base (16) reliée à un bâti (86) et une extrémité d'interface (18) sur laquelle est fixé le dispositif de préhension (50),
**caractérisée en ce que** le dispositif de préhension (50) est relié à l'extrémité d'interface (18) par des moyens élastiques (72) qui sollicitent le dispositif de préhension (50) vers une position normale dans laquelle il est en appui sur une surface d'appui (78) liée à l'extrémité d'interface (18), et **en ce que** le dispositif de préhension (50) peut se déplacer par rapport à l'extrémité d'interface (18) selon une direction de protection, à l'encontre des moyens élastiques (72), jusqu'à une position de butée dans laquelle il arrive au contact d'une surface de butée (90) liée au bâti (86).

2. Machine selon la revendication 1, **caractérisée en ce que** le dispositif de préhension (50) est monté sur l'extrémité d'interface (18) de manière à pouvoir coulisser par rapport à l'extrémité d'interface (18) selon une direction de protection entre sa position normale et sa position de butée.

3. Machine de remplissage selon la revendication 2, **caractérisée en ce que** la direction de protection est sensiblement horizontale.

4. Machine de remplissage selon l'une des revendications 2 ou 3, **caractérisée en ce que** le dispositif de préhension (50) s'étend depuis l'extrémité d'interface (18) selon la direction de protection de telle sorte que le récipient (52) est en porte-à-faux par rapport au capteur (10).

5. Machine de remplissage selon l'une quelconque des revendications 2 à 4, **caractérisée en ce que** le dispositif de préhension (50) est monté à coulissement sur une tige de guidage cylindrique (60) qui est solidaire de l'extrémité d'interface (18) du capteur (10).

6. Machine de remplissage selon la revendication 5, **caractérisée en ce qu'**il est prévu des moyens de blocage en rotation (73, 75) du dispositif de préhension par rapport au capteur (10) autour de l'axe de la tige de guidage (60).

7. Machine de remplissage selon l'une quelconque des revendications précédentes, **caractérisée en ce que** le capteur de poids est un capteur à moment constant réalisé sous la forme d'un corps (12) qui est muni d'au moins un évidemment central (14) de telle sorte que les deux extrémités (16, 18) sont liées l'une à l'autre par des traverses (20) sensiblement parallèles dont les jonctions (22) aux extrémités (16, 18) sont déformables pour former des points d'articulation, et **en ce que** les traverses (20) sont sensiblement parallèles à la direction de protection.

8. Machine de remplissage selon l'une quelconque des revendications précédentes, **caractérisée en ce que** le dispositif de préhension (50) et le bâti (86, 85) délimitent entre eux un compartiment étanche (94) à l'intérieur duquel est agencé le capteur d'effort (10).

9. Machine de remplissage selon la revendication 8, **caractérisée en ce que** l'étanchéité du compartiment (94) est assurée par un soufflet souple (96) qui relie le dispositif de préhension (50) au bâti (86).

## Patentansprüche

1. Maschine zur gewichtsabhängigen Füllung jener Art, bei der ein zu füllender Behälter (52) von einer Greifvorrichtung (50) getragen wird, die durch einen Kraftsensor (10) gestützt wird, und jener Art, bei der der Kraftsensor aus einem verformbaren Teil besteht, das ein mit einem Rahmen (86) verbundenes Basisende (16) und ein Grenzflächenende (18), an dem die Greifvorrichtung (50) befestigt ist, aufweist,
**dadurch gekennzeichnet, dass** die Greifvorrichtung (50) über elastische Mittel (72) mit dem Grenzflächenende (18) verbunden ist, wobei die elastischen Mittel die Greifvorrichtung (50) in eine Normalstellung vorbelasten, in der sie an einer Stützfläche (78) anliegt, die mit dem Grenzflächenende (18) verbunden ist, und dass sich die Greifvorrichtung (50) bezüglich des Grenzflächenendes (18) entgegen den elastischen Mitteln (72) in eine Schutzrichtung bis in eine Anschlagsstellung bewegen kann, in der sie mit einer mit dem Rahmen (86) verbundenen Anschlagsfläche (90) in Kontakt kommt.

2. Maschine nach Anspruch 1, **dadurch gekennzeichnet, dass** die Greifvorrichtung (50) so am Grenzflächenende (18) angebracht ist, dass sie sich bezüglich des Grenzflächenendes (18) in einer Schutzrichtung zwischen ihrer Normalstellung und ihrer Anschlagsstellung verschieben kann.

3. Füllmaschine nach Anspruch 2, **dadurch gekennzeichnet, dass** die Schutzrichtung im Wesentlichen horizontal verläuft.

4. Füllmaschine nach Anspruch 2 oder 3, **dadurch gekennzeichnet, dass** sich die Greifvorrichtung (50) von dem Grenzflächenende (18) in Schutzrichtung so erstreckt, dass der Behälter (52) bezüglich des Sensors (10) freitragend ist.

5. Füllmaschine nach einem der Ansprüche 2 bis 4, **dadurch gekennzeichnet, dass** die Greifvorrichtung (50) verschiebbar an einer fest mit dem Grenzflächenende (18) des Sensors (10) verbundenen zylindrischen Führungsstange (60) angebracht ist.

6. Füllmaschine nach Anspruch 5, **dadurch gekennzeichnet, dass** sie mit Mitteln (73, 75) zur Verhinderung einer Drehung der Greifvorrichtung bezüglich des Sensors (10) um die Achse der Führungsstange (60) versehen ist.

7. Füllmaschine nach einem der vorhergehenden Ansprüche, **dadurch gekennzeichnet, dass** der Gewichtssensor ein Konstantmoment-Sensor ist, der in Form eines Körpers (12) ausgebildet ist, der mit mindestens einer mittleren Aussparung (14) versehen ist, so dass die beiden Enden (16, 18) durch im Wesentlichen parallele Querträger (20) miteinander verbunden sind, deren Verbindungsstellen (22) mit den Enden (16, 18) verformbar sind, um Gelenkpunkte zu bilden, und dass die Querträger (20) im Wesentlichen parallel zur Schutzrichtung verlaufen.

8. Füllmaschine nach einem der vorhergehenden Ansprüche, **dadurch gekennzeichnet, dass** die Greifvorrichtung (50) und der Rahmen (86, 85) zwischen sich eine dichte Kammer (94) begrenzen, in der der Kraftsensor (10) angeordnet ist.

9. Füllmaschine nach Anspruch 8, **dadurch gekennzeichnet, dass** die Dichtigkeit der Kammer (94) durch einen Faltenbalg (96) gewährleistet wird, der die Greifvorrichtung (50) mit dem Rahmen (86) verbindet.

## Claims

1. Weigh filling machine, of the type in which a container (52) to be filled is carried by a gripping device (50) which is supported by a load sensor (10), and of the type in which the load sensor consists of a deformable component having a base end (16) connected to a frame (86) and an interface end (18) to which the gripping device (50) is fixed, **characterized in that** the gripping device (50) is connected to the interface end (18) by elastic means (72) which urge the gripping device (50) towards a normal position in which it bears against a bearing surface (78) linked to the interface end (18), and **in that** the gripping device (50) can move relative to the interface end (18) in a protection-providing direction, against the action of the elastic means (72), as far as a stop position in which it comes into contact with a stop surface (90) linked to the frame (86).

2. Machine according to Claim 1, **characterized in that** the gripping device (50) is mounted on the interface end (18) in such a way as to be able to slide, relative to the interface end (18), in a protection-providing direction between its normal position and its stop position.

3. Filling machine according to Claim 2, **characterized in that** the protection-providing direction is substantially horizontal.

4. Filling machine according to either of Claims 2 and 3, **characterized in that** the gripping device (50) extends from the interface end (18) in the protection-providing direction such that the container (52) overhangs in relation to the sensor (10).

5. Filling machine according to any one of Claims 2 to 4, **characterized in that** the gripping device (50) is slideably mounted on a cylindrical guiding rod (60) which is secured to the interface end (18) of the sensor (10).

6. Filling machine according to Claim 5, **characterized in that** there are provided means (73, 75) for preventing the rotation of the gripping device relative to the sensor (10) about the axis of the guiding rod (60).

7. Filling machine according to any one of the preceding claims, **characterized in that** the weight sensor is a constant-moment sensor produced in the form of a body (12) which is provided with at least one central cavity (14) such that the two ends (16, 18) are linked to one another by means of substantially parallel crossmembers (20) whose junctions (22) with the ends (16, 18) are deformable so as to form articulation points, and **in that** the crossmembers (20) are substantially parallel to the protection-providing direction.

8. Filling machine according to any one of the preceding claims, **characterized in that** the gripping device (50) and the frame (86, 85) delimit between them a sealed compartment (94) inside which the load sensor (10) is arranged.

9. Filling machine according to Claim 8, **characterized in that** the compartment (94) is sealed by means of a flexible bellows (96) which connects the gripping device (50) to the frame (86).
